# EUROPEAN PATENT APPLICATION

(11) **EP 1 241 149 A2**
(43) Date of publication of application: **18.09.2002**
(21) Application number: 02005021.7
(22) Date of filing: 06.03.2002
(51) Int. Cl.: C05F 1/00

(54) **A method for the preparation of a protein hydrolyzate usable as a fertilizer**

(30) Priority: 15.03.2001 IT TO010237
(71) Applicant: Lipitalia S.p.A., 10156 Torino (IT)
(72) Inventor: Carelli, Gianpaolo, 10143 Torino (IT); Grosso, Alberto, 14100 Asti (IT)
(74) Representative: Rambelli, Paolo (IT)

(57) **Abstract**

The invention relates to a method for the preparation of a protein hydrolyzate usable as a fertilizer, and to the fertilizer obtainable by the method.

The method is characterized in that it uses, as starting materials, protein broths produced by the cooking and pressing of butchery waste. It is also characterized by the steps of:
(a) subjecting the protein broths to a hydrolysis treatment by means of protease enzymes, thus producing a first protein hydrolyzate,
(b) pre-concentrating the first protein hydrolyzate,
(c) subjecting the pre-concentrated first protein hydrolyzate to a further hydrolysis and sterilization treatment at high pressure and temperature, thus producing a second protein hydrolyzate, and
(d) further concentrating the second protein hydrolyzate.

## Description

The present invention relates to a method for the preparation of a protein hydrolyzate usable as a fertilizer, in particular, as manure.

The invention also relates to a protein hydrolyzate produced by the method.

Methods for the preparation of protein hydrolyzates which use starting materials of animal origin, for example, tanning waste, are known.

However, the protein hydrolyzates produced by the known methods contain low percentages of laevorotatory free amino-acids, which reduces their efficacy as fertilizers.

An object of the present invention is therefore to provide a method which can produce a protein hydrolyzate for use as a fertilizer having improved biological properties.

This object is achieved by means of a method according to the preamble of Claim 1, characterized in that it uses, as starting materials, protein broths produced by the cooking and pressing of butchery waste to give a solid phase and a liquid phase comprising fats and proteins, and by the subsequent removal of the fats present in the liquid phase to give protein broths,
and further characterized by the steps of:
(a) subjecting the protein broths to a hydrolysis treatment by means of protease enzymes, thus producing a first protein hydrolyzate,
(b) pre-concentrating the first protein hydrolyzate,
(c) subjecting the pre-concentrated first protein hydrolyzate to a further hydrolysis and sterilization treatment at high pressure and temperature, thus producing a second protein hydrolyzate, and
(d) further concentrating the second protein hydrolyzate.

The invention also relates to a protein hydrolyzate usable as a fertilizer, characterized in that it contains a percentage of laevorotatory free amino-acids greater than the percentage of dextrorotatory free amino-acids, and further characterized in that it is obtainable by the method described above.

A fertilizer and, in particular, a manure, is defined as a product which can supply nutrient elements to vegetable species.

Therefore, in order to be effective on the vegetable metabolism, a fertilizer has to be composed of biochemically active, natural organic substances which can readily be inserted into the vegetable metabolism pathways.

In particular, a fertilizer should contain substances which can directly activate or reactivate the metabolism by virtue of the effect of pre-enzymatic substances, and which can act as precursors for the synthesis of proteins and endogenous enzymes.

As is known, the amino-acids which are present naturally in all proteins belong to the L (laevorotatory) stereochemical series.

A product containing a high percentage of laevorotatory free amino-acids is therefore particularly useful and effective as a fertilizer, particularly as manure.

Further characteristics and advantages of the method of the invention and of the protein hydrolyzate obtainable by the method will become clear from the following detailed description provided purely by way of non-limiting example, with reference to the appended drawings, in which:
Figure 1 is a flow chart of a method for the preparation of the raw material of the method according to the invention,
Figure 2 is a flow chart of a first embodiment and of a second embodiment of the method according to the invention,
Figure 3 is a flow chart of a further embodiment of the method according to the invention, and
Figure 4 is a graph which represents the degree of racemization of the protein hydrolyzate of the invention.

The starting material used in the method of the invention is constituted by protein broths produced from butchery waste. The butchery waste used as the raw material is intended to be low-risk butchery waste.

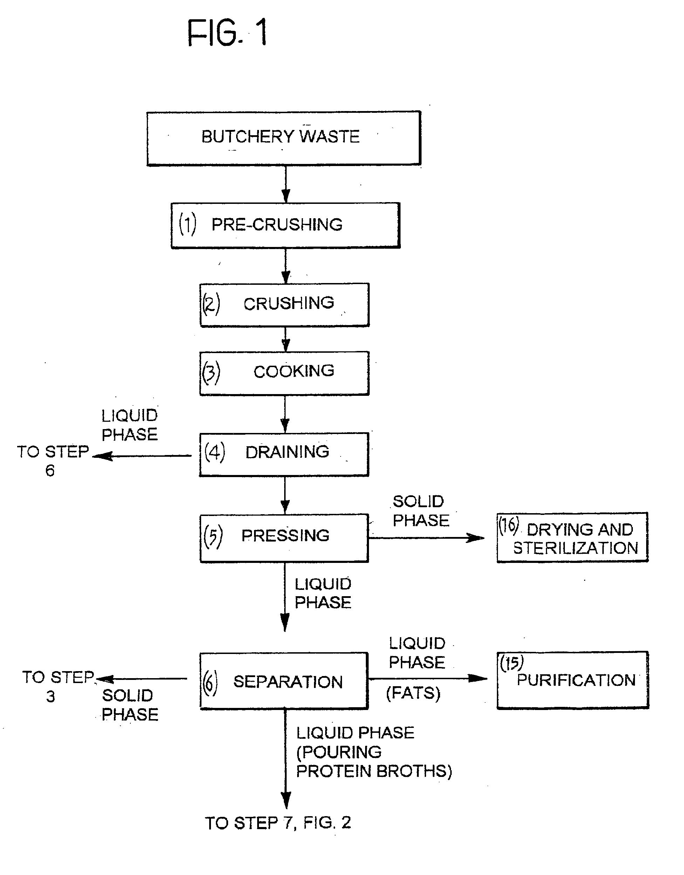

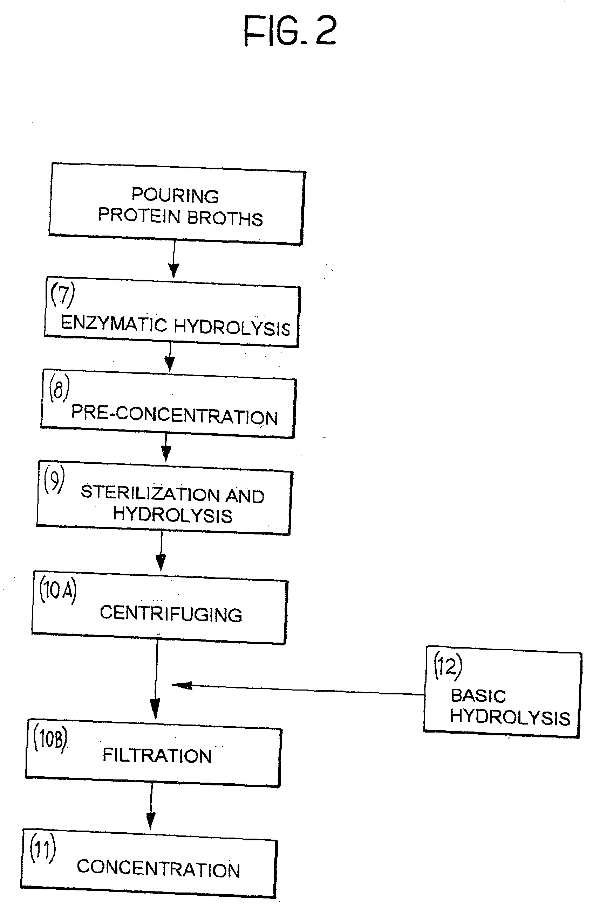

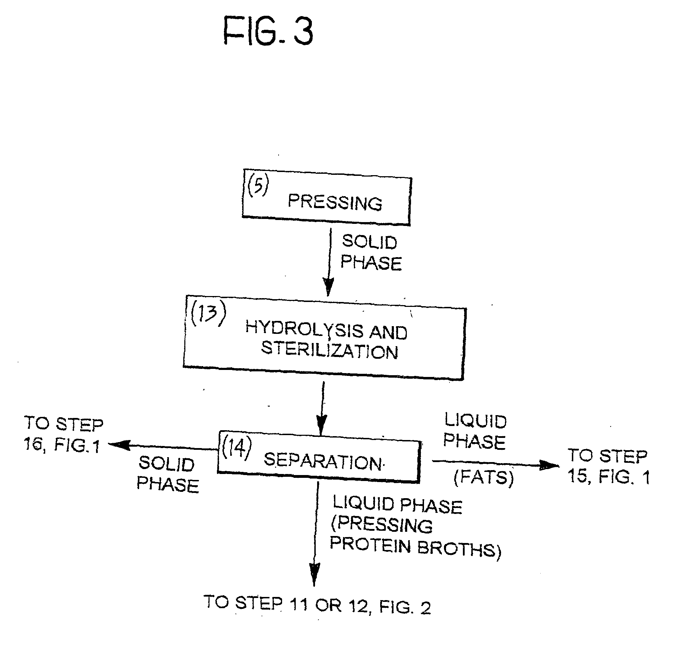

These protein broths are referred to as "pouring protein broths" in Figures 1 and 2.

The pouring protein broths may be produced, for example, by the method illustrated in Figure 1.

This method provides for a first step of pre-crushing (1) and crushing (2) of the butchery waste, followed by a cooking (3), draining (4) and pressing (5) step.

For example, the butchery waste, kept in storage tanks, is sent by means of screw conveyors to crushers with opposed teeth in which a pre-crushing (1) is performed which reduces the size of the waste to about 50 mm.

The material is then sent to a system which can automatically separate any metal swarf to prevent contamination of the final product and any breakage in the course of the subsequent crushing (2).

The subsequent crushing (2) is performed, for example, by means of a mincer of the type with blades and a perforated plate which can reduce the size of the material to maximum dimensions of about 20 mm.

The crushing is followed by a cooking step (3) which has the purpose of separating the fat contained in the butchery waste.

For this purpose, the crushed waste is sent, by means of screw conveyors, to continuous cookers constituted by horizontal cylinders with slightly upwardly-inclined axes, each having two screws for advancing the material.

Both the screws and the cylinders, which are provided with cavities, are heated with hot water so as to bring the temperature of the material to about 75°C and to melt the fat. At the output of the cooker, the material is fed into a screw with an inclined axis, provided with a drainage system. The liquid phase, which is constituted substantially by fat and water with some entrained solid residues, is thus separated from the solids by draining (4).

The solid material produced downstream of the cookers is subjected to pressing (5) in order to complete the separation of a further liquid phase (constituted substantially by water, fat and proteins, possibly with entrained solid residues) and a solid phase (constituted substantially by scraps of fat and bone) by mechanical pressing.

This solid phase which comes from the pressing and which still contains about 50% of water and 4% of fat, is then generally subjected to a drying and sterilization treatment (16).

The drying may be performed, for example, in a horizontal cylindrical reservoir in which a hollow shaft, to which a series of disks are keyed close together, rotates. The surface of each disk is heated by steam at a pressure of 10 bars. The material penetrates between one disk and another and, by virtue of suitably oriented blades fixed to the rotor, advances slowly towards an automatic screw discharge system.

The liquid phase coming from the pressing (5), on the other hand, is collected in a storage reservoir, together with the liquid phase coming from the cooking and from the draining (3 and 4), and is subjected to a separation treatment (6) for the removal of the fat and of any solid residues which are present.

For example, the liquid is supplied to two three-phase screw centrifuges which further separate a solid phase and two liquid phases at a temperature of about 90°C.

One of these liquid phases is substantially constituted by protein broths, and the other is a fatty phase.

The solids may be recycled to the cookers (3) for a further draining and pressing treatment (4 and 5, respectively).

The fatty liquid phase may be subjected to a further purification treatment (15), for example, by centrifuging, by means of which a clear fat, free of impurities, is obtained. This further purification may, for example, be performed with the use of finishing centrifuges of the type with discs, operating at a temperature higher than 90°C.

The liquid protein phase produced in step 6, on the other hand, constitutes the starting material of the method according to the invention.

It will be referred to hereinafter by the term "pouring protein broths".

These protein broths are constituted substantially by a mixture of peptides and proteins in water with a dry solid-residue concentration within the range of about 10-15%.

A first embodiment of the method according to the invention is illustrated in Figure 2.

The method provides, first of all, for a step (7) of enzymatic hydrolysis of the pouring protein broths.

This hydrolysis is performed by the addition to the protein broths of protease enzymes which, as is known, can catalyze the hydrolysis of the peptide bonds present in peptides and, more generally, in proteins.

Preferably, the conditions in which the enzymatic hydrolysis is performed are such that, upon completion of the reaction, a hydrolyzate containing a mixture of peptides having a distribution of molecular weights below 10000 daltons, with an average molecular weight preferably of between 500 and 1000 daltons, is obtained.

For example, the reaction is carried out at a temperature of about 65°C for about 1 hour with a concentration of about 0.05-0.1% of protease enzymes.

The protein hydrolyzate obtained in step 7 is then subjected to a first concentration or pre-concentration step (8), preferably to a dry solid-residue concentration within the range of 35 to 45%.

The pre-concentration may, for example, be performed in a three-stage, thin-film system for evaporation under vacuum.

The protein concentrate produced in step 8 is then subjected to a further hydrolysis and sterilization treatment (9) at high pressure and temperature. This treatment is preferably carried out at a pressure within the range of 7 to 8 bar, a temperature within the range of 160 to 170°C, and for a period of 3-4 hours.

For example, the concentrate is loaded into a cylindrical reactor and subjected to a treatment at about 170°C at a pressure of about 8 bars for a period of about 3 hours, thus producing a second protein hydrolyzate.

Upon completion of the above-described process, a protein hydrolyzate constituted by a mixture of free amino-acids and polypeptides of low molecular weight in aqueous solution is obtained. This hydrolyzate may possibly be further purified by centrifuging (10A) and filtering (10B), for example, with bag filters or filter presses, to remove any solid residues.

Finally, the hydrolyzate may be further concentrated (11) to give a final product having a residual water content such that the final product is a pumpable liquid.

The pumpable liquid product preferably has a dry solid residue concentration within the range of 65 to 75%.

The further concentration (11) may, for example, be performed in a system for continuous concentration under vacuum, the degree of concentration being monitored by a mass measurer.

Alternatively, the protein hydrolyzate may be concentrated to dryness, for example, by spray-drying, thus producing a final product in powder form.

The final product (pumpable liquid or powder) is particularly useful as a fertilizer since it contains a high percentage of laevorotatory free amino-acids.

Moreover, since the optimal average molecular weight of the polypeptides varies according to the use for which the fertilizer is intended, this can be regulated by varying the conditions of the above-described hydrolysis reactions.

For example, the average molecular weight which is optimal for foliar use is about 300 daltons, whereas for fertilization treatments by irrigation, it is about 1000 daltons.

In a second embodiment of the method, the second protein hydrolyzate produced in step 9 is subjected to an additional hydrolysis and sterilization step (step 12, Figure 2) at basic pH.

The hydrolysis and sterilization (12) at basic pH is performed by the addition of hydrated lime.

The reaction is preferably carried out at a pH of about 11 for about 3 hours.

In a further embodiment illustrated in Figure 3, the method also provides for the addition to the second protein hydrolyzate of further protein broths (hereinafter referred to as "pressing protein broths") obtained by treatment, at high pressure and temperature (13), of the solid phase produced by the pressing (step 5, Figure 1) of the butchery waste.

According to this embodiment, the solid phase produced by the pressing (5) is first of all subjected to hydrolysis and sterilization at high pressure and temperature (13).

This treatment is preferably carried out at a pressure within the range of 7 to 8 bars and a temperature within the range of 160 to 170°C.

For example, the solid phase coming from the presses is loaded into a reactor in which it is brought, by direct and indirect heating with steam with continuous stirring, to a temperature of about 170°C and to a pressure of about 8 bars, these conditions being maintained for about 3 hours.

The aim of this hydrolysis treatment is to extract any possible residual protein component from the solid phase coming from the pressing.

The product obtained upon completion of this treatment is in fact constituted by three phases: a fatty phase, a solid residue (constituted substantially by the mineral portion of the bone) and a protein phase in the form of an aqueous solution of amino-acids and peptides.

These phases can easily be separated (14), for example, in a three-stage decanter.

The fatty phase and the solid phase can then be sent to the fat-purification line (step 15, Figure 1) and to the solids drying and sterilization line (step 16, Figure 1), respectively.

The protein phase, or pressing protein broth - which, as mentioned above, is an aqueous solution of amino-acids and peptides -, on the other hand, is pooled with the second hydrolyzate, in order to be subjected to the final concentration step (step 11, Figure 2) or to spray-drying, possibly after basic hydrolysis (step 12, Figure 2).

As already stressed above, the percentage of laevorotatory free amino-acids (which are precursors readily usable for the synthesis of enzymes and proteins) is a very important characteristic for the purposes of the use of the hydrolyzate as a fertilizer, particularly as manure.

The percentage of laevorotatory amino-acids relative to the total content of free amino-acids was determined in various hydrolyzate samples.

As explained above, all of the natural amino-acids which are in the proteins belong to the L stereochemical series. However, when a mixture of free amino-acids is dissolved in solution, some of the L amino-acids undergo a racemization process, that is, a transformation into the dextrorotatory (D) form.

The degree of racemization (RD) of a mixture indicates the percentage of amino-acids in D form present in the mixture.

In other words, the lower the RD value, the greater is the percentage of laevorotatory amino-acids present in the mixture.

The degree of racemization of the hydrolyzate of the present invention was thus calculated by determining, by capillary electrophoresis (CE), the percentage of D-alanine (D-ala) present in samples of hydrolyzate, relative to the total alanine content (D-ala + L-ala).

In all of the samples analyzed, the percentage of laevorotatory free amino-acids was greater than that of dextrorotatory free amino-acids; this percentage is preferably between about 64 and 75%.

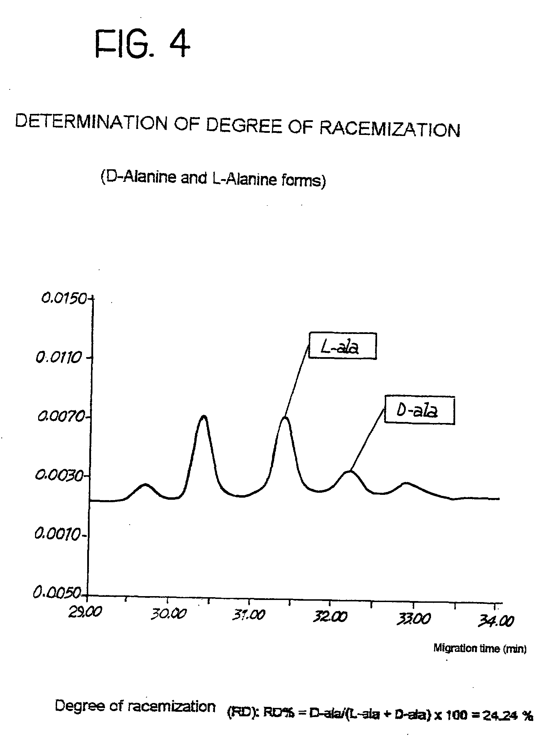

Figure 4 shows the results obtained by the following capillary electrophoresis procedure.

A sample of hydrolyzate was derivatized with DNS-Cl (dansyl chloride) and filtered at 0.45 µm. The sample was then analyzed by CE with the following conditions: Capillary: 50 cm x 50 µm, coated with PAA (BioRad 148-3070), 100 mM pH 8.6 TRIS-borate buffer + SDS (sodium dodecyl sulphate) + urea + EDTA (Fluka 82616) + 10 mM β-cyclodextrin; voltage 15kV; polarity from + to -; injection: 2 psi x sec; scanning: 240 nm; capillary temperature: 20°C.

The degree of racemization obtained by this procedure was 24.24%; this indicates a percentage of 75.76% of L-alanine present in the sample.

## Claims

1. A method for the preparation of a protein hydrolyzate usable as a fertilizer, **characterized in that** it uses, as starting materials, protein broths produced by the cooking and pressing of butchery waste to give a solid phase and a liquid phase comprising fats and proteins, and by the subsequent removal of the fats present in the liquid phase to give protein broths,
and further **characterized by** the steps of:
(a) subjecting the protein broths to a hydrolysis treatment by means of protease enzymes thus producing a first protein hydrolyzate,
(b) pre-concentrating the first protein hydrolyzate,
(c) subjecting the pre-concentrated first protein hydrolyzate to a further hydrolysis and sterilization treatment at high pressure and temperature, thus producing a second protein hydrolyzate, and
(d) further concentrating the second protein hydrolyzate.

2. A method according to Claim 1 in which the hydrolysis and sterilization treatment of step (c) is carried out at a temperature within the range of 160 to 170°C and at a pressure within the range of 7 to 8 bar.

3. A method according to Claim 1 or Claim 2, comprising an additional step of sterilization of the second protein hydrolyzate by the addition of hydrated lime.

4. A method according to any one of Claims 1 to 3 in which pressing protein broths obtained by hydrolysis, at high pressure and temperature, of the solid phase obtained by the pressing of the butchery waste, are added to the second protein hydrolyzate prior to the concentration of step (d).

5. A method according to Claim 4 in which the hydrolysis treatment of the solid phase is carried out at a temperature within the range of 160 to 170°C and at a pressure within the range of 7 to 8 bar.

6. A protein hydrolyzate usable as a fertilizer, **characterized in that** it contains a percentage of laevorotatory free amino-acids greater than the percentage of dextrorotatory free amino-acids, and further **characterized in that** it is obtainable by means of a method according to any one of Claims 1 to 5.

7. A hydrolyzate according to Claim 6, **characterized in that** the percentage of laevorotatory free amino-acids is within the range of 64 to 75% relative to the total free amino-acids.

8. A hydrolyzate according to Claim 6 or claim 7 which is a pumpable liquid.

9. A hydrolyzate according to Claim 6 or Claim 7 which is a powder.
